(19) Europäisches Patentamt
European Patent Office
Office européen des brevets

(11) **EP 2 978 643 B1**

(12) **EUROPÄISCHE PATENTSCHRIFT**

(45) Veröffentlichungstag und Bekanntmachung des Hinweises auf die Patenterteilung:
**18.07.2018   Patentblatt 2018/29**

(51) Int Cl.:
**B60T 8/175** *(2006.01)*   **B60T 8/172** *(2006.01)*
**G01P 7/00** *(2006.01)*

(21) Anmeldenummer: **14711799.8**

(22) Anmeldetag: **24.03.2014**

(86) Internationale Anmeldenummer:
**PCT/EP2014/055854**

(87) Internationale Veröffentlichungsnummer:
**WO 2014/154639 (02.10.2014 Gazette 2014/40)**

(54) **FAHRZEUGREFERENZGESCHWINDIGKEITSBESTIMMUNGSVERFAHREN UND FAHRZEUGSTEUERGERÄT MIT EINEM SOLCHEN VERFAHREN**

METHOD FOR DETERMINING A VEHICLE REFERENCE SPEED AND VEHICLE CONTROLLER HAVING SUCH A METHOD

PROCÉDÉ DE DÉTERMINATION DE LA VITESSE DE RÉFÉRENCE D'UN VÉHICULE ET APPAREIL DE COMMANDE DE VÉHICULE À L'AIDE D'UN TEL PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2013   DE 102013205245**

(43) Veröffentlichungstag der Anmeldung:
**03.02.2016   Patentblatt 2016/05**

(73) Patentinhaber: **Continental Teves AG & Co. oHG 60488 Frankfurt (DE)**

(72) Erfinder:
• ZHANG, Chen
  **60439 Frankfurt am Main (DE)**
• LEVRIER, Julien
  **71628 Ludwigsburg (DE)**
• KESSLER, Philipp
  **55283 Nierstein (DE)**

(56) Entgegenhaltungen:
EP-A1- 1 719 676    EP-A1- 1 719 676
FR-A1- 2 932 878    FR-A1- 2 932 878
FR-A1- 2 932 892    FR-A1- 2 932 892

• KHAN U A ET AL: "Distributing the Kalman Filter for Large-Scale Systems", IEEE TRANSACTIONS ON SIGNAL PROCESSING, IEEE SERVICE CENTER, NEW YORK, NY, US, Bd. 56, Nr. 10, 1. Oktober 2008 (2008-10-01), Seiten 4919-4935, XP011228243, ISSN: 1053-587X, DOI: 10.1109/TSP.2008.927480
• USMAN A KHAN ET AL: "Distributing the Kalman Filter for Large-Scale Systems", ARXIV.ORG, CORNELL UNIVERSITY LIBRARY, 201 OLIN LIBRARY CORNELL UNIVERSITY ITHACA, NY 14853, 2 August 2007 (2007-08-02), XP080296928, DOI: 10.1109/TSP.2008.927480

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren gemäß Oberbegriff von Anspruch 1.

Es sind bereits verschiedene Verfahren zur Bestimmung einer zuverlässigen Fahrzeugreferenzgeschwindigkeit in Kraftfahrzeugbremsregelungssystemen, Antriebsschlupfregelungen und Fahrdynamikregelungen für Kraftfahrzeuge bekannt geworden.

Gemäß der DE 43 14 830 A1 wird ausschließlich eine Auswertung von Radgeschwindigkeiten zu Grunde gelegt. Stehen weitere Sensoren im Fahrzeug zur Verfügung, können diese zur Referenzgeschwindigkeitsbestimmung zusätzlich herangezogen werden. So beschreibt die WO 02/103366 die Bestimmung der Fahrzeugreferenzgeschwindigkeit in einem ESP/ESC-Steuergerät mittels eines Längsbeschleunigungssensors, den Raddrehzahlsensoren und der Ortsbestimmung über einen GPS-Sensor. Die DE 10 2008 045 619 A1 verarbeitet zusätzlich die über eine Kamera ermittelte Ortsinformation. Aus der DE 10 2004 060 677 A1 geht ein Bestimmungsverfahren hervor, bei dem über ein optisches Verfahren die Geschwindigkeit über Grund bestimmt wird. Die WO 2011 023 591 A1 und die DE 10 259 272 A1 beschäftigen sich mit der Verknüpfung von Radgeschwindigkeitsinformationen, einem Modell für die Längsbeschleunigung und einem Raddynamik-Modell. Das Raddynamik-Modell und das Längsbeschleunigungsmodell schätzen oder bestimmen auf Grundlage der Radbewegung die Beschleunigung des Fahrzeugs.

Bei einer rein auf der Grundlage von schlupffrei rollenden Rädern der nicht angetriebenen Achse basierenden Verfahren kann es Situationen geben, bei denen die Fahrzeuggeschwindigkeit nicht korrekt bestimmt werden kann. Ein Fahrzeugreferenzgeschwindigkeitssignal ist dann bei manchen Bremsvorgängen oder in einem Antriebsschlupf-Fall nicht repräsentativ für die tatsächliche Fahrzeuggeschwindigkeit. Dieses Problem besteht ganz besonders bei Allradfahrzeugen im Antriebsschlupf- oder Schleppmomentfall. Häufig führt das dazu, dass die geschätzte Geschwindigkeit im Bremsfall für alle Fahrzeugtypen unterschätzt und im Antriebsfall für Allradfahrzeuge überschätzt werden kann. Durch Einbeziehung des Beschleunigungssignals und Motormoments besteht die Möglichkeit, die geschätzte Geschwindigkeit zu plausibilisieren. Jedoch ist das Motormomentsignal im gebremsten Fall nicht immer verfügbar, da der Motor ausgekuppelt sein kann. Zudem hat das Schleppmomentsignal nicht eine vergleichbar hohe Güte wie das Motormomentsignal im Antriebsfall. Außerdem kann das Motormoment nicht vollständig auf die Straße übertragen werden, da die Räder durchdrehen bzw. blockieren können. Auf der anderen Seite ist das Beschleunigungssignal der Inertialsensorik aufgrund des Langzeitdrifts, der Montageungenauigkeiten und der Straßensteigung offsetbehaftet. Zudem ist das Signal durch Achsenoszillation und trägheitsbedingte Verzögerung verrauscht. Für den Beschleunigungssensor ist keine gleichwertige Redundanz vorhanden.

Mit dem Problem der Fusionierung von Signalen, die eine unterschiedliche Zuverlässigkeit aufweisen, beschäftigt sich die eingangs erwähnte DE 10 259 272 A1. Gemäß dem beschriebenen Verfahren wird die Fahrzeuggeschwindigkeit unter Einbeziehung mehrerer zur Verfügung stehender Sensorsignale bestimmt, deren Einfluss auf das Rechenergebnis von Gewichtungsfaktoren abhängig ist.

Weiterer Stand der Technik über ein Fahrzeuggeschwindigkeitsbestimmungsverfahren ist aus dem Druckschrift FR 2 932 892 A1 bekannt.

Die Aufgabe der vorliegenden Erfindung besteht darin, eine besonders genaue, robuste und zuverlässige, mittels eines Fusionsverfahrens mit Gewichtungsfaktoren gewonnenes Fahrzeugreferenzgeschwindigkeitsbestimmungsverfahren auf Basis von Raddrehzahlinformationen unter Einbeziehung zusätzlicher Fahrzustandssensoren, bereitzustellen, wie beispielsweise Längsbeschleunigungssensor oder Bremsdruck.

Diese Aufgabe wird erfindungsgemäß gelöst durch das Verfahren gemäß Anspruch 1.

Gemäß dem Fahrzeugreferenzgeschwindigkeitsbestimmungsverfahren entsprechend der Erfindung werden Fahrzustandssignale miteinander fusioniert, wobei eine Einbeziehung von den Fahrzustandssignalen jeweils zugeordneten Gewichtungsfaktoren erfolgt. Dabei braucht nicht jedes Signal einen Gewichtungsfaktor aufzuweisen. Allerdings ist das in der Regel der Fall und außerdem besonders vorteilhaft.

Die Signale sind beispielsweise physikalische Fahrzustände oder Fahrparameter, die mittelbar oder unmittelbar direkt aus Sensoren stammen oder indirekt durch Verarbeitung anderer Signale bestimmt oder geschätzt werden.

Durch das zuvor beschriebene Verfahren ist es möglich, eine besonders genaue Radschlupfberechnung durchzuführen, wodurch sich Fahrdynamik-Regelungen, Antriebsschlupfregelungen und Bremsenregelungen, die auf das erfindungsgemäße Fahrzeugreferenzgeschwindigkeitsbestimmungsverfahren zurückgreifen, maßgeblich verbessern lassen.

Die Erfindung bezieht sich somit nach einer besonders bevorzugten Ausführungsform auf ein Verfahren zur Bestimmung des Fahrzustands, insbesondere der Fahrzeuggeschwindigkeit, der Beschleunigung und der Straßensteigung durch eine hierarchische Struktur von stochastischen Schätzern.

Das Fusionierungsmodul ist bevorzugt in mindestens zwei hierarchisch geordnete Modellberechnungsebenen eingeteilt bzw. aufgegliedert, wobei jede Modellberechnungsebene einen Teilbereich eines Fahrzeugs modellhaft nachbildet und insbesondere jede Ebene mindestens einen stochastischen Schätzer umfasst.

Besonders bevorzugt sind die Modellberechnungsebenen in die Ebenen

- Fahrzeugmodell,

- Reifenmodell und

- Antriebsstrangmodell

unterteilt, wobei das Fahrzeugmodell ganz besonders bevorzugt ein Longitudinaldynamikmodell des Fahrzeugs ist.

Die Erfindung umfasst außerdem die nachfolgend beschriebenen bevorzugten Ausführungsformen A) bis F):

A) Verfahren zur Fahrzeuggeschwindigkeitsschätzung

Gemäß dem hier beschriebenen Verfahren erfolgt eine modellbasierte Referenzgeschwindigkeitsschätzung unter Verwendung von Modellen auf drei Ebenen (a1 bis a3).

a1) Verfahren zur Nachbildung eines Antriebstrangs (Antriebstrangmodell)

Die Nachbildung durch rechnerische Simulation erfolgt unter Einbeziehung von Motormoment, Bremsmoment und Antriebstrangbauteilern (Motor, Kupplung, Getriebe, Differential, Räder).

a2) Verfahren zur Nachbildung (rechnerische Simulation) einer Reifenkennlinie ($\mu$ über Schlupf-Kurve, sogenanntes Reifenkennlinienmodell)

Zur Bestimmung der Kennlinienparameter umfasst das Fusionierungsmodul vorzugsweise neben stochastischen Schätzern zusätzlich mindestens einen weiteren, insbesondere nach der Methode der kleinsten Quadrate arbeitenden, stochastische Schätzer und/oder ein physikalisches Rechenmodell. Die Methode der kleinsten Quadrate ist zweckmäßigerweise ein rekursives Least-Squares-Verfahren.

a3) Longitudinales Fahrzeugmodell insbesondere auf Basis eines Fahrzeugbeschleunigungs- bzw. verzögerungsmodells

Das longitudinale Fahrzeugmodell umfasst mindestens ein Fusionsfilter. Als Fusionsilter kommt zweckmäßigerweise ein sich bekannte stochastische Schätzer, wie beispielsweise Kalman-Filter in Betracht.

B) Hierarchische Zustandsschätzungsstruktur mit mehreren stochastischen Zustandsschätzern auf drei Ebenen (b1-b3)

b1) Ebene Antriebsstrangmodell:

Es sind nach jeweils alternativ bevorzugten Ausführungsformen jeweils ein Antriebsstrangmodell für die Achsen vorgesehen, wobei die Geschwindigkeiten der Räder an den verschiedenen Achsen damit verarbeitet werden. Es besteht damit die Möglichkeit, zur Schätzung des Zustands eine Aufteilung der Modelle auf die zwei Achsen eine Kraftfahrzeug vorzunehmen. Mit anderen Worten ist dann jeweils ein Zustandsschätzer für eine Achse allein zuständig, in der Regel ist dies je ein Schätzer für die Vorderachse und ein Schätzer für die Hinterachse.

Es ist alternativ auch möglich, eine allgemeine Lösung für alle in Fahrzeugen mögliche Antriebsarten einschließlich des Zustands der Bremsung anzuwenden. In diesem Fall besitzt jeder Zustandsschätzer als Eingänge ein Antriebsmoment und ein Bremsmoment. Beispielsweise bei einem lediglich zweirädrig bzw. einachsig angetriebenen Fahrzeug bekommt nur der Zustandsschätzer für die angetriebene Achse ein positives antreibendes Moment zugespeist während der Zustandsschätzer für die nicht angetriebene Achse das Antriebsmoment 0 erhält. Bei einem Allrad-Fahrzeug bekommt jede Achse anteilig Antriebsmoment zugespeist. Bei einem Bremsvorgang bekommt jede Achse ein negatives Bremsmoment zugespeist.

b2) Ebene Reifenmodell zur Bestimmung des Reifen/Straßen-Kontakts

Zur Bestimmung der Parameter der Reifenkennlinien wird bevorzugt eine radindividuelle Schlupfkurvenschätzung eingesetzt. Diese erfolgt insbesondere durch Schätzung nach einem rekursiven kleinsten Quadrate-Verfahren. Bei dieser Schätzung werden zweckmäßigerweise die maximal zur Verfügung stehenden Reibwerte sowie Reifensteifigkeiten in die Berechnung mit einbezogen.

b3) Ebene Fahrzeugmodell

Die Fahrzustandssignale werden nach einer bevorzugten Ausführungsform aus den folgenden Signalquellen gebildet:

- ESC-Fahrzustandssensoren, wie vorzugsweise

    i) Radgeschwindigkeiten ($\omega_i$) und

    ii) Fahrzeuglängsbeschleunigung ($a_{x,sensor}$).

    Insbesondere umfassen diese

- die Fahrzeuglängsgeschwindigkeit ($v_{ref}$),

- die Fahrzeuglängsbeschleunigung ($a_{ref}$) und den

- Straßensteigungswinkel ($\gamma_{ref}$).

Gemäß einer weiteren bevorzugten Ausführungsform erfolgt eine Bestimmung der Fahrzeuggeschwindigkeit und Fahrzeuglongitudinalbeschleunigung, die zumindest die folgenden Teile umfasst:

- Einen stochastischen Schätzer mit linearer Dynamik zur Fusionierung von einer gemessenen, insbesondere um Langzeitoffset und Steigung kompensierten, Fahrzeugbeschleunigung,

- eine aus dem Modell berechneten Fahrzeugbeschleunigung, und

- vier um Schlupf befreite Radgeschwindigkeiten.

Bevorzugt erfolgt in der Ebene Fahrzeugmodell eine Bestimmung einer Modellfahrzeugbeschleunigung $a_{x,model}$ basierend auf den Umfangskräften aus den Reifenkennlinien und der Fahrzeugmasse aufgrund eines Fahrzeuglongitudinalmodells. Hierbei werden besonders bevorzugt ein getrennter Schätzer für den Steigungswinkel und ein getrennter Schätzer für das übergeordnete Fahrzeug eingesetzt.

Zur Bestimmung der Fahrzeugsteigung wird somit nach einer bevorzugten Ausführungsform eine stochastische Schätzung aus der gemessenen Fahrzeugbeschleunigung und der geschätzten Fahrzeugbeschleunigung durchgeführt.

C) Modellierung des System- und Messrauschens

c1) Nach einer bevorzugten Ausführungsform erfolgt eine modellbasierte Herleitung des Messrauschens vom stochastischen Fusionsfilter aus den Unsicherheiten der Filter auf der unteren Modellebene des Antriebsstrangs b1).

c2) Weiterhin kann nach einer ebenfalls bevorzugten Ausführungsform des Verfahrens auch eine Modellierung des Messrauschens unter Einbeziehung von Fahrzeugeigenschaften vorgenommen werden, wie insbesondere zumindest unter Einbeziehung der Fahrzeugmasse, der Trägheiten und des Einschwingverhaltens.

c3) Gemäß einer weiteren bevorzugten Ausführungsform kann schließlich noch eine situationsabhängige modellbasierte Ermittlung des Systemrauschens durchgeführt werden.

D) Dimensionsreduktion bei den einzelnen Schätzern (durch Aufteilung eines gesamten Filters in mehrere Schätzer) und damit verbundene Reduktion der Rechenlast und der RAM/ROM-Ressourcen sowie eine höhere Genauigkeit

E) Redundanz zum temporären Ausfall von der Längsbeschleunigungs-Sensorik

F) Ausschließlicher Einsatz von Standard ESC-Sensorik, wie: Raddrehzahlen, Längsbeschleunigungssensor, Motormoment und Bremsdrücken, wobei die Bremsdrücke sensorisch bestimmt oder auch modellbasiert bestimmt sein können.

Hierdurch ergibt sich der Vorteil, dass sich das Verfahren besonders einfach in übliche ESP/ESC-Bremsensteuergeräte implementieren lässt.

Vorzugsweise wird das erfindungsgemäße Verfahren unter Verwendung von mathematischen Berechnungen in reiner Fixpunkt-Arithmetik programmtechnisch umgesetzt. Dies ist vor allem durch eine erfindungsgemäß erreichte Dimensionsreduktion möglich. Hierdurch ergibt sich eine hohe Verarbeitungsgeschwindigkeit insbesondere auf Rechensystemen mit vergleichsweise geringer Verarbeitungsgeschwindigkeit, wie dies in typischen Kraftfahrzeugsteuergeräten häufig der Fall ist.

Durch die erfindungsgemäß bevorzugt durchgeführte redundante Verarbeitung von geschätzten oder sensorisch bestimmten physikalischen Fahrzustandsgrößen ergibt sich eine insgesamt höhere Robustheit des Berechnungsverfahrens gegenüber Sensorausfällen oder fehlerhaften Sensorsignalen.

Aufgrund der gemäß einer bevorzugten Ausführungsform eingesetzten Multi-Hypothesen-Verfolgungsstrategie mittels stochastischer Signalverarbeitung ergibt sich gegenüber der einfachen Umschaltung zwischen Signalen (z.B. Radgeschwindigkeiten) eine bessere Trefferwahrscheinlichkeit.

Weitere bevorzugte Ausführungsformen ergeben sich aus den Unteransprüchen und der nachfolgenden Beschreibung eines Ausführungsbeispiels an Hand von Figuren.

Es zeigt

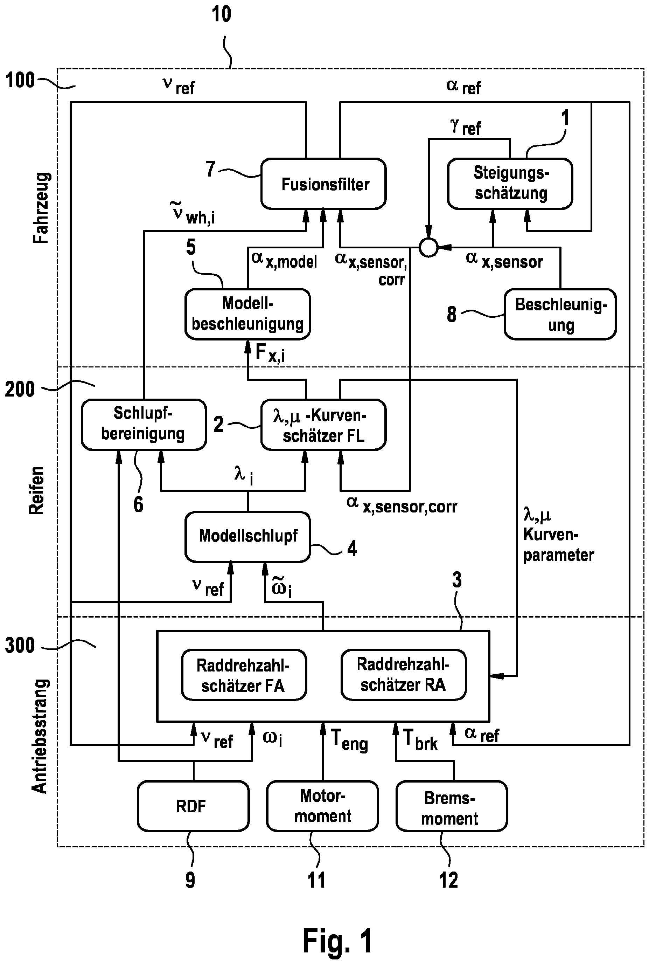

Fig. 1    eine Darstellung eines Fahrzeugreferenzgeschwindigkeitsbestimmungsverfahrens mit einer Aufteilung in mehrere miteinander verbundene stochastische Schätzer.

In Fig. 1 ist ein Schätzer 10 zur Bestimmung der Fahrzeugreferenzgeschwindigkeit mit den Hauptberechnungsblöcken angezeigt, wie er in einem elektronischen Fahrzeugsteuergerät, wie etwa einem ESC/ESP-Bremsensteuergerät oder einem Fahrzeugzentralrechner zum Einsatz kommen kann. In dem elektronischen Steuergerät werden von daran angeschlossenen oder innerhalb des Steuergeräts enthaltenen Fahrzeugsensoren, wie Raddrehzahlsensoren, Gierratensensor, Längsbeschleunigungssensor Signale aufgenommen und mit einem Mikrocontroller verarbeitet. Auf Grund der internen digitalen Signalverarbeitung sind daher diskrete Kalman-Filter zur Fusionierung von Zuständen besonders zweckmäßig.

Bei dem Schätzer 10 handelt es sich um einen hierarchischen Filteransatz mit drei Ebenen. Das Zustandsraummodell lässt sich für ein Allrad-Fahrzeug oder für ein zweirädrig angetriebenes durch eine allgemeine Zustandsgleichung ausdrücken, welche einen mathematischen Zusammenhang zwischen den Radgeschwindigkeiten pro Rad $\omega_i$ (i=1 bis 4), der Fahrzeuggeschwindigkeit $v_x$ und der Beschleunigung $a_x$ in Längsrichtung (x) des Fahrzeugs herstellt.

Der Schätzer 10 verarbeitet die folgenden digital gewandelten Sensorsignale:

- $\omega_i$ = Raddrehzahlsignale 9 (in Fig. 1 RDF bezeichnet),

- $a_{x,sensor}$ = Beschleunigungssensorsignal 8,

- $T_{eng}$ = Motormomentsignal 11 und

- $P_{THZ}$ = Fahrervordruck 12 (THZ,

in Fig. 1 Kasten "Bremsmoment").

Die Beobachtung der oben erwähnten rechenintensiven Zustandsgleichung ist in Schätzer 10 in drei eigenständige Berechnungsebenen aufgeteilt, welche jeweils als eigenständige Fahrzeugmodelle aufgefasst werden können:

- Reifenmodell 200 inklusive $\lambda,\mu$-Kurvenschätzer 2 zur Bestimmung der Schlupfkennlinie,

- Antriebstrangmodell 300 inklusive Raddynamikmodell 3 und

- Longitudinaldynamikmodell 100 des Fahrzeugs.

Das beispielgemäße Verfahren kann als eine unterteilte, insbesondere zumindest teilweise hierarchisch gegliederte Struktur von stochastischen Schätzern verstanden werden. Damit kann ein Beobachter auf einer höheren Ebene die Informationen der unteren Ebenen zusammenführen und bewerten. Der damit entstandene hierarchische Aufbau hat den Vorteil, dass eine Aufgabentrennung erfolgt. Die unteren Schätzer einer solchen Struktur erzeugen eine Vorfilterung, während die obere Ebene für die Fusionierung verantwortlich ist. Es kann eine adaptive Selbstorganisation der "top-down"- und "bottom-up"-Einflüsse entstehen. Zusätzlich profitieren die Schätzer in den unteren Ebenen vom "top-down"-Einfluss der hierarchischen Struktur. Das bedeutet, die unteren Ebenen können die Prädiktionen der oberen Ebenen nutzen, welche aufgrund des beispielsweise höheren Informationsgehaltes der mehreren Eingänge oder des genaueren Modells präzisere Ergebnisse liefern können. Weiter können die in den oberen Ebenen festgelegten Prioritäten nach unten weitergereicht werden, um die unteren Beobachter, mit einer spezifischeren Sicht der Dinge, zu unterstützen. Für die oberen Ebenen hingegen ist der "buttom-up"-Einfluss wichtig, da diese dadurch nur die Verwaltung der Prädiktionen der unteren Ebenen durchführen müssen, die sie als Messung erhalten.

Ein stochastischer Schätzer ist zum Beispiel ein an sich bekanntes Kalman-Filter, insbesondere diskretes Kalman-Filter. Mit diesem Filter ist es möglich, sowohl sensorisch ermittelte Messsignale (z.B. Messgrößen physikalischer Fahrzustände, wie etwa die mit einem Längsbeschleunigungssensor gemessene Längsbeschleunigung), als auch sogenannte Pseudo-Messsignale (z.B. physikalische Fahrzustandsgrößen, die aus bzw. mit anderen Signalen berechnet oder geschätzt sind) miteinander bei gleichzeitiger Gewichtung in Abhängigkeit der Unschärfe der geschätzten Signale (Konfidenzintervalle bzw. "Güte") miteinander zu fusionieren. Um bei der Verarbeitung der Signale immer auch die Signalqualität mit einbeziehen zu können, erfolgt die Übertragung der Signale vorzugsweise durch Übertragung beziehungsweise Übergabe zum nächsten Rechenmodul des aktuellen Signalwerts zusammen mit der aktuellen Güte des momentan übertragenen Signals.

Da es sich bei einem diskreten Kalman-Filter um ein für lineare Gleichungssysteme besonders geeignetes Filter handelt, ist es zweckmäßig, eine Linearisierung im Bereich des Arbeitspunktes vorzunehmen, beispielsweise durch den besonders bevorzugten Einsatz eines erweiterten Kalman-Filters (EKF) oder eines "Unscented" Kalman-Filters (UKF). Für die Umsetzung in einem Fahrzeugsteuergerät sind erweiterte Kalman-Filter ganz besonders zu bevorzugen, da diese Vorteile in Bezug auf die notwendige Kapazität des verwendeten physikalischen Rechners (Ressourcen) aufweisen.

Durch die Modellierung des Reifen-Straße-Kontaktes ergibt sich ein nichtlineares Gesamtsystem, welches numerisch nur mit relativ großem Rechenzeitbedarf gehandhabt werden kann. Es kann daher zweckmäßig sein, keine ausschließliche Verwendung von einfachen Kalman-Filtern durchzuführen, welche vor allem für lineare Systeme konzipiert sind. Es hat sich gezeigt, dass EKF-Filter für den hier beschriebenen Zweck besonders geeignet sind, da es möglich ist mit Hilfe dieser Filter das System um den aktuellen Arbeitspunkt herum zu linearisieren.

Eine weitere Möglichkeit, auf die Nichtlinearität des Systems einzugehen, ist die Verwendung eines UKF-Filters.

Die im Beispiel eingesetzten stochastischen Schätzer umfassen zumindest die nachfolgend beschriebenen Komponenten 1) bis 7). Diese Aufzählung soll nicht als Beschränkung des Beispiels der Erfindung verstanden werden. Vielmehr ist es möglich, einzelne Komponenten wegzulassen oder weitere Komponenten je nach der bestehenden Anforderung hinzuzufügen.

Aufgrund des Unterschiedes der Rad- und Fahrzeugdynamik wird beispielsweise die Schätzung von der Referenzgeschwindigkeit sowie der Fahrzeugbeschleunigung von der Schätzung der Winkelgeschwindigkeiten abgetrennt. Das Ziel ist die Schätzung der Fahrzeugreferenzgeschwindigkeit, daher befindet sich der Schätzer für diese in der oberen Ebene. Um das Modell der Winkelgeschwindigkeiten weiter zu vereinfachen, findet eine Auftrennung in Vorder- und Hinterachse statt. Die Wahl dieser Konfiguration hat den Vorteil, im Gegensatz zu der Auftrennung in die linken und rechten Räder, dass die Räder an den beiden Achsen stärker miteinander verkoppelt sind.

Ein auf diese Weise gebildeter Schätzer ist vergleichsweise genau und weist keine besonderen numerischen Probleme aufgrund von zu unterschiedlichen Dynamiken auf. Im Gegensatz zu einem Schätzer für das komplette Modell besteht durch die Aufteilung und die selbstorganisierende Struktur auch der Vorteil der leichteren Parametrisierbarkeit. Die Auftrennung in Vorder- und Hinterachse ermöglicht es ebenfalls, den Beobachter leichter für andere Fahrzeugtypen auszulegen. Somit erleichtert der Aufbau des Schätzers 10 insgesamt eine Implementierung in einem Fahrzeugrechner.

Auf der unteren Ebene 300 befinden sich zwei EKF-Filter 3, die die schlupfbehafteten Winkelgeschwindigkeiten $\omega_{FL}$ und $\omega_{FR}$ an der Vorderasche sowie $\omega_{RL}$ und $\omega_{RR}$ an der Hinterachse schätzen. Die Schätzer verwenden als Eingänge das antreibende Moment des Motors $T_{eng}$ 11 sowie die Bremsmomente $T_{brk}$ 12. Die Bremsmomente lassen sich aus den Bremsdrücken des Fahrzeugbremssystems berechnen.

Bei der Verwendung der Modellierung eines Fahrzeuges mit zwei Antriebsaggregaten verwendet der Schätzer der Vorderachse das Motormoment des vorderen Motors und der Schätzer der Hinterachse das Motormoment des hinteren Motors. Ebenfalls die Bremsmomente teilen sich auf durch die Auftrennung der Verbindung zwischen den Achsen.

Auf der oberen Ebene 100 befindet sich ein Kalman-Filter 7, welches als Fusions-Filter verwendet wird. Es schätzt die Geschwindigkeit $v_{ref}$ und die Beschleunigung $a_{ref}$ des Fahrzeuges. Somit sind im dargestellten Beispiel insgesamt drei Schätzer im Einsatz, einer für die Dynamik der Vorderachse, einer für die Dynamik der Hinterachse und einer für die Gesamtdynamik des Fahrzeuges. Im unteren Teil der Ebene 100 befindet sich ein Block 5 zur Erzeugung von Pseudo-Messungen für die Beschleunigung in Form von den vier schlupf kompensierten Radgeschwindigkeiten, die dem Fusions-Filter zur Verfügung gestellt werden. Weiter verwendet dieses das Messsignal des Beschleunigungssensors a aus Block 8. Um die Stärken einer hierarchischen Struktur nutzen zu können, werden die von den Filtern der unteren Ebene bestimmten Standardabweichungen an das Fusions-Filter weitergegeben. Außerdem tauschen sich die Schätzer für die Vorder- und Hinterachse ihre Schätzungen untereinander aus und verwenden die Schätzung der Geschwindigkeit und Beschleunigung des Fusions-Filters als Eingang. Bei der Modellierung eines Fahrzeuges mit zwei Antriebsaggregaten entfällt die Verwendung der Schätzungen der unteren Ebene untereinander.

## 1) Komponente "Steigungswinkelschätzer"

Aus der ermittelten Fahrzeugreferenzbeschleunigung $v_{ref}$ sowie der gemessenen Beschleunigung $a_{ref}$ aus 7 sowie der gemessenen Beschleunigung $a_{x,sensor}$ aus 10 wird ein Straßensteigungswinkel $\gamma_{ref}$ mittels eines stochastischen Filters geschätzt.

## 2) Komponente "$\mu$-Schlupf-Kennlinienschätzer, $\lambda$, $\mu$-Kurvenschätzer"

Anhand der offsetkorrigierten Longitudinalbeschleunigung des Fahrzeugs $a_{x,sensor,corr}$ kann der ausgenutzte Reibwert $\mu_{used}$ berechnet werden und jeweils nach Antriebsart (Zweiradantrieb, Allrad-Mittendifferential) der Reibwert auf die vier Räder aufgeteilt werden. Aufgrund einer parametrisierten Reifenkennlinie werden anhand der ausgenutzten Reibwerte $\mu_{used,i}$ und der berechneten Schlüpfe $\lambda_i$ der Räder aus 4 die Parameter $c_0$, $c_1$ und $c_2$ der Reifenkennlinie durch ein Least-Squares-Verfahren ermittelt und daraus auch die maximalen Reibwerte $\mu_{max,i}$ bestimmt. Aus der gewonnenen Kennlinie können abhängig von den Schlüpfen die Modellreibwerte $\mu_{model,i}$ und die dazu gehörigen Radumfangskräfte

$$F_{x,i} = F_{n,i} \cdot \mu_{model,i}$$

gewonnen werden.

## 3) Komponente "Drehzahlschätzer"

Unter Auswertung des Motormomentsignals $T_{eng}$, der Raddrehzahlsignalen $\omega_i$, de3 geschätzten Fahrzeugbeschleunigung $a_{ref}$ aus 7, des geschätzten Steigungswinkels $\gamma_{ref}$ aus 1, der ermittelten Reifenumfangskräfte $F_{x,i}$ und der Reifeneigenschaften (Schlupfkurve) aus 2 werden unter Berücksichtigung des Antriebstrangmodells (inkl. Reifendynamikmodells) die rauschreduzierten Radgeschwindigkeiten $\tilde{\omega}_i$ mittels stochastischen Schätzverfahrens (z.B. Extended Kalman-Filter) ermittelt.

## 4) Komponente "Schlupfberechnung"

Anhand der geschätzten Fahrzeuggeschwindigkeit $v_{ref}$ aus 7 und der geschätzten Raddrehzahlen $\tilde{\omega}_i$ aus 3 werden die Radschlüpfe $\lambda_i$ berechnet.

## 5) Komponente "Modellbeschleunigung"

Aus der Summe der geschätzten Reifenkräfte $F_{x,i}$ aus 2 wird durch Division der Masse eine Modellfahrzeugbeschleunigung $a_{x,model}$ berechnet.

## 6) Komponente "Schlupfbereinigte Radgeschwindigkeiten"

Aus den gemessenen Radgeschwindigkeiten $\omega_i$ werden die geschätzten Schlüpfe $\lambda_i$ aus 4 abgezogen und so die der Fahrzeuggeschwindigkeit entsprechenden und um den Schlupf bereinigten Radgeschwindigkeiten $\tilde{v}_{wh,i}$ berechnet.

## 7) Komponente "Fusionsfilter"

In einem stochastischen Fusionsfilter (z.B. Kalman-Filter) werden aus den folgenden Informationen mittels eines linearen Dynamikmodells die Fahrzeuggeschwindigkeit $v_{ref}$ und die Fahrzeugbeschleunigung $a_{ref}$ geschätzt:

- $\tilde{v}_{wh,i}$ der Komponente 6),

- die gemessene Fahrzeugbeschleunigung $a_{x,sensor}$, nach Abzug des Einflusses vom Steigungswinkel $\gamma_{ref}$, und

- die Modellfahrzeugbeschleunigung $a_{x,model}$ aus der Komponente 5).

Das gesamte Rahmenwerk unterliegt einer stochastischen Signalverarbeitung. Das heißt, die Komponenten übergeben neben den geschätzten Signalen selbst noch die Unschärfe der geschätzten Signale (Konfidenzintervalle), welche in der weiteren Signalverarbeitung berücksichtigt werden. Wie zu erkennen, ist die Anzahl der Messungen größer als die Anzahl der Zustände und die Struktur des Kalman-Filters ermöglicht es, Messsignale gemeinsam mit Pseudo-Messsignalen zu fusionieren. Der Kalman-Filter filtert die vertrauenswürdigsten Informationen aus den redundanten Geschwindigkeits- und den Beschleunigungssignalen anhand des Signalrauschens heraus.

## Patentansprüche

1.  Fahrzeugreferenzgeschwindigkeitsbestimmungsverfahren, bei dem direkt oder indirekt bestimmte oder geschätzte Fahrzustandssignale unter Einbeziehung von den Fahrzustandssignalen jeweils zugeordneten Gewichtungsfaktoren in einem Fusionierungsmodul (10) fusioniert werden, **dadurch gekennzeichnet, dass**
das Fusionierungsmodul (10) mindestens zwei stochastische Schätzer (1, 2, 3, 7) umfasst, welche untereinander Signale austauschen, die physikalische Fahrzeuggrößen entsprechen, wobei die Verknüpfung der Schätzer (1, 2, 3, 7) im Einklang mit einem Physikmodell für das Fahrzeugverhalten gewählt ist und dass das Fusionierungsmodul in mindestens zwei hierarchisch geordnete Modellberechnungsebenen (100, 200, 300) aufgegliedert ist, wobei jede Modellberechnungsebene (100, 200, 300) einen Teilbereich eines Fahrzeugs modellhaft nachbildet und jede Ebene mindestens einen stochastischen Schätzer umfasst und wobei die Modellberechnungsebenen die Ebenen

- Fahrzeugmodell (100),
- Reifenmodell (200) und
- Antriebsstrangmodell (300)

umfassen.

2.  Verfahren nach Anspruch 1, **dadurch gekennzeichnet, dass** das Fusionierungsmodul neben stochastischen Schätzern (1, 3, 7) zusätzlich mindestens einen weiteren, insbesondere nach der Methode der kleinsten Quadrate arbeitenden, stochastische Schätzer (2) und/oder ein physikalisches Rechenmodell (4, 5, 6) umfasst.

3.  Verfahren nach Anspruch 1 oder 2, **dadurch gekennzeichnet, dass** die Fahrzustandssignale aus den

- ESC-Fahrzustandssensoren, wie insbesondere

    i) Radgeschwindigkeiten ($\omega_i$) und der
    ii)         Fahrzeuglängsbeschleunigung ($a_{x,sensor}$),

gewonnen werden, die besonders bevorzugt
- die Fahrzeuglängsgeschwindigkeit ($v_{ref}$),
- die Fahrzeuglängsbeschleunigung ($a_{ref}$) und den
- Straßensteigungswinkel ($\gamma_{ref}$)

umfassen.

4.  Verfahren nach mindestens einem der Ansprüche 1 bis 3, **dadurch gekennzeichnet, dass** das Fahrzeugmodell (100) insbesondere ein Longitudinaldynamikmodell des Fahrzeugs ist.

5.  Verfahren nach mindestens einem der Ansprüche 1 bis 4 **dadurch gekennzeichnet, dass** zur Bestimmung der Parameter der Reifenkennlinien eine radindividuelle Schlupfkurvenschätzung eingesetzt wird.

6.  Verfahren nach mindestens einem der Ansprüche 1 bis 5, **dadurch gekennzeichnet, dass** für jede Achse ein stochastischer Schätzer eingesetzt wird, welcher aus den gemessenen Radgeschwindigkeiten und der geschätzten Fahrzeuggeschwindigkeit die schlupfbefreiten Radgeschwindigkeiten bestimmt.

7. Verfahren nach mindestens einem der Ansprüche 1 bis 6, **dadurch gekennzeichnet, dass** eine Bestimmung der Fahrzeuggeschwindigkeit und Fahrzeuglongitudinalbeschleunigung erfolgt, wobei dabei

    - ein stochastischer Schätzer mit linearer Dynamik zur Fusionierung von einer gemessenen, insbesondere um Langzeitoffset und Steigung kompensierten, Fahrzeugbeschleunigung,
    - eine aus dem Modell berechneten Fahrzeugbeschleunigung, und
    - vier um Schlupf befreiten Radgeschwindigkeiten

eingesetzt werden.

8. Verfahren nach mindestens einem der Ansprüche 1 bis 7, **dadurch gekennzeichnet, dass** eine Bestimmung einer Modellfahrzeugbeschleunigung ($a_{x,model}$) basierend auf den Umfangskräften aus den Reifenkennlinien und der Fahrzeugmasse aufgrund eines Fahrzeuglongitudinalmodells erfolgt.

9. Verfahren nach mindestens einem der Ansprüche 1 bis 8, **dadurch gekennzeichnet, dass** eine stochastische Bestimmung oder Schätzung der Fahrbahnsteigung aus der gemessenen Fahrzeugbeschleunigung und der geschätzten Fahrzeugbeschleunigung erfolgt.

10. Fahrzeugsteuergerät, **dadurch gekennzeichnet, dass** ein Verfahren gemäß den Ansprüchen 1 bis 9 darin ausgeführt wird.

**Claims**

1. Vehicle reference speed determination method, wherein directly or indirectly determined or estimated driving state signals are fusioned in a fusion model while incorporating respective weighting factors associated with the driving state signals, **characterized in that**
the fusion model (10) comprises at least two stochastic estimators (1, 2, 3, 7) that exchange signals with each other that correspond to the physical vehicle variables, wherein the combination of the estimators (1, 2, 3, 7) is selected in accordance with a physical model of the vehicle behavior and **in that** the fusion model is structured in at least two hierarchically structured model calculation levels (100, 200, 300), wherein each model calculation level (100, 200, 300) models a sub region of a vehicle and each level comprises at least one stochastic estimator and wherein the model calculation levels comprise the levels

    - vehicle model (100),
    - tire model (200) and

drive train model (300).

2. Method according to Claim 1, **characterized in that** besides stochastic estimators (1, 3, 7) the fusion model additionally comprises a further stochastic estimator (2), in particular that works according to the least squares method, and/or a physical computer model (4, 5, 6).

3. Method according to Claim 1 or 2, **characterized in that** the driving state signals are derived from the

    - ESC-driving state sensors, such as in particular

        i) wheel speeds ($\omega_i$) and the
        ii) vehicle longitudinal acceleration ($a_{x,sensor}$),

    which particularly preferably comprise
    - the vehicle longitudinal speed ($v_{ref}$),
    - the vehicle longitudinal acceleration ($a_{ref}$) and the
    - road gradient angle ($\gamma_{ref}$).

4. Method according to at least one of Claims 1 to 3, **characterized in that** the vehicle model (100) is in particular a longitudinal dynamic model of the vehicle.

5. Method according to at least one of Claims 1 to 4, **characterized in that** a wheel-specific slip curve estimation is used for determining the parameters of the tire characteristics.

6. Method according to at least one of Claims 1 to 5, **characterized in that** a stochastic estimator is used for each axle that determines the slip adjusted wheel speeds from the measured wheel speeds and the estimated vehicle speed.

7. Method according to at least one of Claims 1 to 6, **characterized in that** a determination of the vehicle speed and vehicle longitudinal acceleration is carried out, during which the following are used

    - a stochastic estimator with linear dynamics for the fusion of a measured vehicle acceleration, in particular compensated for long-term offset and gradient,

- a vehicle acceleration calculated from the model, and
- four wheel speeds adjusted for slip.

8. Method according to at least one of Claims 1 to 7, **characterized in that** determination of a model vehicle acceleration ($a_{x,model}$) is carried out based on the circumferential forces from the tire characteristics and the vehicle mass based on a vehicle longitudinal model.

9. Method according to at least one of Claims 1 to 8, **characterized in that** a stochastic determination or estimation of the road gradient is carried out from the measured vehicle acceleration and the estimated vehicle acceleration.

10. Vehicle controller, **characterized in that** a method according to Claims 1 to 9 is implemented therein.

## Revendications

1. Procédé de détermination de vitesse de référence de véhicule, selon lequel des signaux d'état de conduite déterminés directement ou indirectement ou estimés sont fusionnés dans un module de fusion (10) en incorporant des facteurs de pondération respectivement associés aux signaux d'état de conduite, **caractérisé en ce que**
le module de fusion (10) comporte au moins deux estimateurs stochastiques (1, 2, 3, 7) qui échangent entre eux des signaux qui correspondent aux grandeurs physiques de véhicule, la combinaison des estimateurs (1, 2, 3, 7) étant choisie en accord avec un modèle physique pour le comportement du véhicule et **en ce que** le module de fusion est divisé en au moins deux niveaux de calcul de modèle (100, 200, 300) organisés hiérarchiquement, chaque niveau de calcul de modèle (100, 200, 300) reproduisant sous la forme d'un modèle une zone partielle d'un véhicule et chaque niveau comportant au moins un estimateur stochastique et les niveaux de calcul de modèle comportant les niveaux

- modèle de véhicule (100),
- modèle de pneu (200) et
- modèle de chaîne cinématique (300).

2. Procédé selon la revendication 1, **caractérisé en ce que** le module de fusion, outre les estimateurs stochastiques (1, 3, 7), comporte en plus au moins un estimateur stochastique (2) supplémentaire, fonctionnant notamment selon la méthode du plus petit carré, et/ou un modèle de calcul physique (4, 5, 6).

3. Procédé selon la revendication 1 ou 2, **caractérisé en ce que** les signaux d'état de conduite sont obtenus à partir des

- capteurs d'état de conduite ESC, comme notamment

i) des vitesses de roue ($\omega_i$) et de
ii) l'accélération longitudinale de véhicule ($a_{x,sensor}$),

lesquels comportent notamment de préférence
- la vitesse longitudinale de véhicule ($v_{ref}$),
- l'accélération longitudinale de véhicule ($a_{ref}$) et
- l'angle de pente de route ($\gamma_{ref}$).

4. Procédé selon au moins l'une des revendications 1 à 3, **caractérisé en ce que** le modèle de véhicule (100) est notamment un modèle dynamique longitudinal du véhicule.

5. Procédé selon au moins l'une des revendications 1 à 4, **caractérisé en ce qu'**une estimation de courbe de patinage individuelle par roue est utilisée pour déterminer les paramètres des courbes caractéristiques des pneus.

6. Procédé selon au moins l'une des revendications 1 à 5, **caractérisé en ce qu'**un estimateur stochastique est utilisé pour chaque essieu, lequel détermine les vitesses de roue exemptes de patinage à partir des vitesses de roue mesurées et de la vitesse estimée du véhicule.

7. Procédé selon au moins l'une des revendications 1 à 6, **caractérisé en ce qu'**une détermination de la vitesse de véhicule et de l'accélération longitudinale de véhicule est effectuée, en utilisant ici

- un estimateur stochastique ayant une dynamique linéaire pour la fusion d'une accélération de véhicule mesurée, notamment compensée en fonction du décalage de longue durée et de pente,
- une accélération de véhicule calculée à partir du modèle, et
- quatre vitesses de roue exemptes de patinage.

8. Procédé selon au moins l'une des revendications 1 à 7, **caractérisé en ce qu'**une détermination d'une accélération de véhicule modèle ($a_{x,model}$) est effectuée sur la base d'un modèle longitudinal de véhicule en se basant sur les forces périphériques à partir des courbes caractéristiques de pneu et de la masse du véhicule.

9. Procédé selon au moins l'une des revendications 1 à 8, **caractérisé en ce qu'**une détermination ou une estimation stochastique de la pente de la voie de circulation est effectuée à partir de l'accélération de véhicule mesurée et de l'accélération de véhicule estimée.

10. Contrôleur de véhicule, **caractérisé en ce qu'**un procédé selon les revendications 1 à 9 est mis en oeuvre dans celui-ci.

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4314830 A1
- WO 02103366 A
- DE 102008045619 A1
- DE 102004060677 A1
- WO 2011023591 A1
- DE 10259272 A1
- FR 2932892 A1